Europäisches Patentamt

European Patent Office

Office européen des brevets

(11) Numéro de publication: **0 200 687 B1**

# FASCICULE DE BREVET EUROPEEN

(45) Date de publication de fascicule du brevet:
16.10.91

(51) Int. Cl.⁵: **G05B 19/04**

(21) Numéro de dépôt: **86810194.0**

(22) Date de dépôt: **30.04.86**

(54) **Dispositif de commande numérique pour tour automatique.**

(30) Priorité: 02.05.85 CH 1856/85

(43) Date de publication de la demande:
05.11.86 Bulletin 86/45

(45) Mention de la délivrance du brevet:
16.10.91 Bulletin 91/42

(84) Etats contractants désignés:
**CH DE FR GB IT LI**

(56) Documents cités:
**US-A- 4 120 185**
**US-A- 4 253 359**

(73) Titulaire: **VN SA electronics**
**23, rue des Oeuches**
**CH-2740 Moutier(CH)**

(72) Inventeur: **von Niederhausern, Francis**
**55, rue Centrale**
**CH-2740 Moutier(CH)**
Inventeur: **Matthias, Eugen**
**Freiestrasse 19**
**CH-8032 Zurich(CH)**

(74) Mandataire: **Caron, Gérard et al**
**ICB Ingénieurs Conseils en Brevets SA Pas-**
**sage Max. Meuron 6**
**CH-2001 Neuchâtel(CH)**

## Description

Le dispositif de commande numérique, objet de l'invention, est destiné à assurer l'entraînement de la broche de la poupée et celui de l'arbre à cames commandant principalement les mouvements de la poupée et des outils associés à la poupée d'un tour automatique monobroche.

Avant l'avènement, relativement récent, des dispositifs de commande numérique, les tours du type susmentionné étaient les seuls à disposition pour usiner de façon entièrement automatique des séries de pièces identiques à partir de barres de matière.

Par ailleurs, les dispositifs de commande numérique ont amené les fabricants de machines à produire une nouvelle génération d'automates, conçus spécialement en fonction du nouveau mode de commande. L'utilisateur de ces automates a ainsi la possibilité d'entreprendre de petites séries de pièces, même de lots d'essais, à des prix en rapport avec ceux des grandes séries, car la mise en train d'un tel automate est rapide. En effet, pour l'ouvrier spécialisé dans la conduite des tours automatiques, le diagramme des opérations nécessaires à l'usinage d'une pièce donnée est vite établi et son introduction dans la mémoire de l'ordinateur de la commande numérique est immédiate.

Le prix de ces automates est toutefois élevé au point que leur pourcentage dans le parc des machines des ateliers de décolletage est généralement inférieur à 20%. Il serait d'ailleurs contrindiqué pour un tel atelier de convertir à 100% son parc de machines en tours à commande numérique, cela pour plusieurs raisons.

L'usinage de grandes séries de pièces compliquées, requérant l'intervention de plus de dix outils n'est pas rentable sur un tour automatique à commande numérique. De plus, une commande mécanique par cames est plus fiable qu'une commande électronique; elle tombe moins souvent en panne. En outre, si un tour à commande mécanique par cames tombe néanmoins en panne, son utilisateur peut le réparer lui-même. Les pannes de l'électronique requièrent, au contraire, l'intervention d'un spécialiste de l'extérieur, voir du producteur de la machine, ce qui entraîne, à tout le moins, des arrêts de production relativement longs, réduisant l'utilisateur, impuissant en pareil cas, à une passivité totale.

L'entrée en service des tours à commande numérique a cependant souligné un défaut des tours mécaniques commandés par cames, dont les utilisateurs avaient plus ou moins conscience, sans toutefois en mesurer l'ampleur. Quoi qu'il en soit, les utilisateurs de commandes numériques ont aussitôt remédié à ce défaut en programmant leurs tours de façon que la vitesse de coupe de chacun des outils soit aussi favorable que possible.

Il existe bien des tours automatiques à commande mécanique par cames dans lesquels la broche du tour peut être entraînée à deux vitesses différentes; mais les tours connus sont limités à cette seule possibilité.

Il existe aussi des tours automatiques, en particulier des tours multibroches, dans lesquels l'arbre à cames est entraîné par un moteur indépendant qui est soumis à l'action d'un dispositif électronique sensible aux positions angulaires de cet arbre et qui accélère la vitesse de rotation de ce moteur et par conséquent de l'arbre à cames, lorsque les outils doivent être déplacés soit de leur position de repos jusque dans celle où ils vont entreprendre leur opération d'usinage soit de celle où ils ont terminé cette opération jusque dans leur position de repos (US 4,253,359). Le dispositif électronique de ces tours connus a donc pour seul effet de commuter la vitesse de rotation du moteur de l'arbre à cames d'une vitesse rapide, pour le mouvement d'approche des outils, à une vitesse lente, pour le travail de ceux-ci, puis à nouveau de cette vitesse lente à la vitesse rapide, pour le retrait des outils. Ce dispositif est sans effet sur le moteur entraînant les broches, qui tournent par conséquent toujours à la même vitesse. Or, c'est précisément la vitesse de ces broches qu'il conviendrait de faire varier et cela de façon continue et non seulement pour la faire passer brusquement d'une vitesse déterminée à une autre vitesse déterminée.

Il existe aussi des machines, telles que des presses ou des machines comprenant des mécanismes de transfert, dans lesquelles les dispositifs de commande conventionnels par cames ou boîtes de contact ont été remplacés par un dispositif de commande électronique aux réactions quasi instantanées, afin d'accélérer le rythme de travail dans son ensemble (US 4,120,185). Ces dispositifs de commande connus ne font donc pas travailler les machines, auxquelles ils sont associés, à des vitesses variables au cours d'un cycle de travail, mais à une vitesse rapide unique.

Selon la forme des pièces qu'il s'agit d'usiner sur un tour automatique, les outils qui conviendraient le mieux pour cela nécessiteraient toutefois plus de deux vitesses de rotation différentes de la broche du tour, en raison de leurs vitesses de coupe propres. De plus, pour effectuer un fonçage et surtout le tronçonnage des pièces, il faudrait accélérer progressivement cette vitesse de rotation au fur et à mesure que l'outil se rapproche de l'axe de la pièce, afin que sa vitesse de coupe reste constante. Comme les tours automatiques connus à commande mécanique par cames ne permettent pas ces modifications de la vitesse de rotation de la broche du tour en cours d'usinage, leurs utilisateurs doivent, pour effectuer certaines opérations d'usinage, recourir à des outils moins favorables, qui s'émoussent plus vite, au détriment de la production.

L'invention vise à remédier à ces défauts en créant un dispositif de commande numérique qui permette n'importe quelle modification de la vitesse de rotation de la broche du tour en cours d'usinage, qui soit de prix modéré et qui puisse être adjoint rapidement à un tel tour, pratiquement sans transformation de ce dernier. Elle part d'un état de la technique tel qu'indiqué par le préambule de la revendication 1, correspondant à US-A-4 253 359.

Les particularités définies par la caractéristique de la revendication 1 assurent ce résultat. La mémoire peut, en effet, adapter la vitesse de rotation du moteur entraînant la broche du tour à des outils de natures différentes, tels, par exemple, que des burins à plaquette nitrurée, en métal dur ou en acier rapide, des mèches de perçage, des tarauds, afin que ces outils travaillent dans les conditions qui leur conviennent, c'est-à-dire à la vitesse de coupe voulue. En outre, lorsqu'un burin fonce dans la matière de la barre en travail, pour usiner une saignée ou tronçonner une pièce terminée, la mémoire peut accélérer progressivement le moteur entraînant la broche du tour au fur et à mesure que l'outil se rapproche de l'axe de cette pièce. Simultanément, cette mémoire peut aussi accélérer la vitesse de rotation de l'arbre à cames, afin de maintenir constante l'épaisseur du copeau.

Par ailleurs, les éléments constitutifs du dispositif de commande selon l'invention (moteur, encodeur), sont des éléments standards; ils sont produits en grandes séries et peuvent être obtenus sur le marché à des prix modérés. Il suffit ainsi d'avoir une mémoire qu'il soit possible de programmer en fonction de chaque modèle de pièce à produire.

Le poste de programmation défini par la revendication 2 permet à l'utilisateur de programmer lui-même et très rapidement cette mémoire pour chaque nouvelle pièce à produire. La vitesse de rotation du moteur entraînant la broche du tour et éventuellement celle du moteur entraînant l'arbre à cames peuvent ainsi être réglées comme cela convient à chaque phase de l'usinage de cette pièce.

Le variateur de fréquence défini par la revendication 3 est un élément simple, auquel la mémoire peut aisément transmettre les consignes nécessaires à faire tourner à la vitesse voulue le moteur entraînant la broche du tour.

Il en va de même de l'amplificateur défini par la revendication 4, qui agit sur le moteur à courant continu entraînant l'arbre à cames.

Enfin, les correcteurs définis par la revendication 5 permettent à l'utilisateur de déterminer, par des manoeuvres aussi simples que rapides, les vitesses de rotation des deux moteurs en question, qui sont les plus favorables, sans avoir, pour chaque nouvelle tentative, à modifier la programmation de la mémoire.

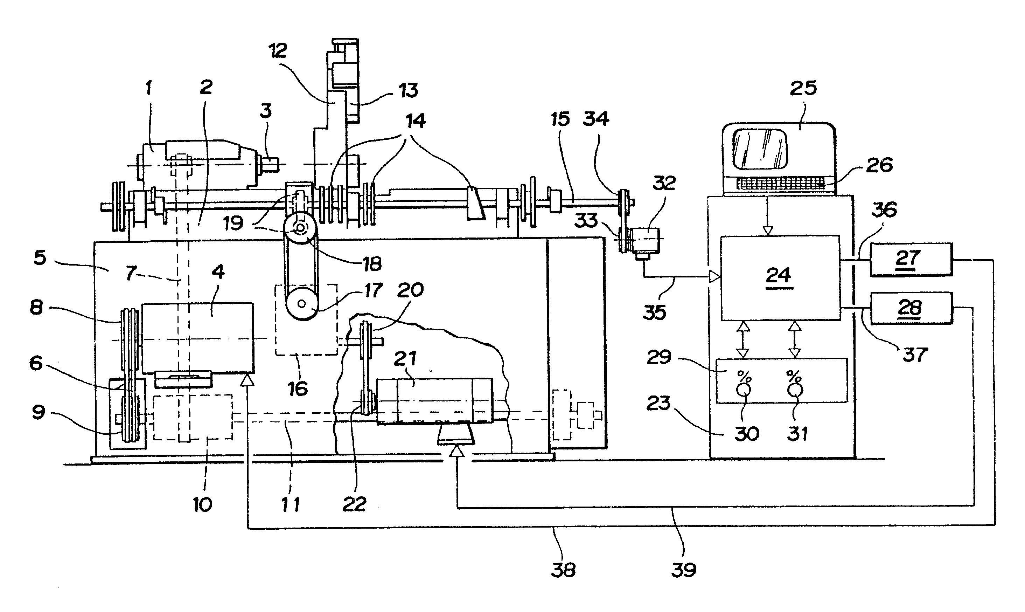

Une forme d'exécution du dispositif de commande selon l'invention est représentée schématiquement et à simple titre d'exemple au dessin dans lequel

la figure unique en est une vue en élévation.

Le dispositif de commande numérique représenté est adjoint à une décolleteuse à poupée 1, mobile longitudinalement sur un banc 2. Cette poupée contient une broche 3, qui peut être entraînée en rotation par un moteur asynchrone 4, logé dans le socle 5 de la décolleteuse. La liaison mécanique entre le moteur 4 et la broche 3 est réalisée de façon conventionnelle, par des courroies 6, 7 et des poulies 8, 9, 10, les deux dernières étant calées sur un arbre 11, également logé dans le socle 5.

La broche 3 est destinée à entraîner une barre de matière en rotation, l'extrémité antérieure de cette dernière étant engagée dans un canon de guidage (non représenté) monté dans un support vertical 12. Sur ce dernier sont également montés des outils (non représentés) qui sont disposés en éventail et sont fixés à des coulisseaux 13 mobiles radialement en direction de l'axe de la broche 3, en vue de façonner la face latérale des pièces à produire. D'autres outils (non représentés) permettent d'en usiner la face antérieure.

Les opérations de cette décolleteuse sont commandées par des cames 14, calées sur un arbre 15. Celui-ci est entraîné en rotation à partir d'un réducteur de vitesse 16 par des poulies 17, 18 et une transmission à vis sans fin 19. Dans les décolleteuses connues de ce type, la poulie d'entrée 20 du réducteur 16 est entraînée par une poulie calée sur l'arbre 11.

Pour adjoindre le dispositif de commande selon l'invention à la décolleteuse décrite, cette dernière poulie est supprimée et un moteur à courant continu 21 du dispositif de commande numérique est monté dans le socle 5. C'est la poulie 22, calée sur l'arbre du moteur 21, qui entraîne la poulie 20 du réducteur 16 et par conséquent l'arbre à cames 15.

L'armoire 23 du dispositif de commande numérique contient une mémoire 24, un variateur de fréquence 27, un amplificateur 28 et deux correcteurs 29, dont chacun peut être réglé manuellement à l'aide des boutons 30, 31. Un poste 25 à clavier 26, monté sur l'armoire 23, permet de programmer la mémoire 24. Le dispositif de commande numérique comprend encore un encodeur 32, qui est connecté à l'arbre à cames 15 par les deux poulies 33, 34.

L'encodeur 32 enregistre à chaque instant la position angulaire de l'arbre à cames 15 et il transmet cette information à la mémoire 24 par la ligne 35. A chaque angle parcouru par l'arbre à cames 15 pendant un tour correspond une fonction ou opération de la décolleteuse, destinée à produire une pièce: serrage de la barre de matière dans la broche 3, avance et recul de la poupée 1 et/ou d'un ou de plusieurs outils, tronçonnage de la pièce usinée et desserrage de la barre de matière. Les données fixées dans la mémoire 24 à l'aide du clavier 26 correspondent aux vitesses auxquelles la broche 3 et l'arbre à cames 15 doivent tourner pendant chacun des angles parcourus par l'arbre 15 pendant un tour complet. En fonction des informations reçues de l'encodeur 32, la mémoire 24 est ainsi en mesure de transmettre des consignes au variateur de fréquence 27 et à l'amplificateur 28 par ses lignes de sortie 36 et 37.

Le variateur de fréquence 27 est relié au moteur 4 par une ligne 38. En fonction des consignes successives reçues de la mémoire 24, le variateur de fréquence 27 modifie la fréquence du courant alimentant le moteur 4, de sorte que la vitesse de rotation de ce dernier change dans la mesure nécessaire à faire tourner la broche 3 à la vitesse voulue à la suite de chaque nouvel ordre transmis par le variateur de fréquence 27.

L'amplificateur 28 est relié de même au moteur 21 par une ligne 39. En fonction des consignes successives reçues de la mémoire 24, il modifie l'alimentation du moteur 21, ce qui fait changer sa vitesse de rotation et par conséquent celle de l'arbre à cames 15. Il convient de noter qu'il existe aussi des moteurs à courant alternatif dont la vitesse de rotation peut être modifiée par un amplificateur. Actuellement, ils sont toutefois relativement coûteux.

Pendant chaque angle de rotation parcouru par l'arbre à cames 15, le dispositif de commande numérique décrit permet à l'utilisateur d'imposer une vitesse de rotation déterminée aussi bien à la broche 3 qu'à l'arbre 15. Pendant n'importe lequel de ces angles, par exemple pendant celui correspondant au tronçonnage de la pièce usineé, les vitesses de rotation de la broche 3 et/ou de l'arbre 15 peuvent naturellement être modifiées progressivement.

Pour usiner des pièces pour lesquelles l'utilisateur sait exactement à quelles vitesses la broche 3 et l'arbre à cames 15 doivent tourner pendant chaque phase d'un cycle d'usinage, les correcteurs 29 restent hors service. Si, au contraire, l'utilisateur n'est pas sûr de la vitesse à laquelle la broche 3 ou l'arbre à cames 15 ou les deux doivent tourner pendant une phase d'usinage déterminée, il peut, à l'aide du clavier 26, ordonner à la mémoire 24 d'activer l'un ou l'autre ou les deux correcteurs 29 pour la durée de cette phase d'usinage.

Le premier des correcteurs 29 est branché au départ de la ligne 36. S'il a été activé par la mémoire 24, son bouton 30 permet de corriger en plus ou en moins la consigne que la mémoire transmettrait sans cela au variateur de fréquence 27. Le second correcteur 29 est de même branché au départ de la ligne 37 et son bouton 31 permet de corriger de la même façon la consigne transmise à l'amplificateur 28. Ces corrections des consignes transmises au variateur de fréquece 27 et à l'amplificateur 28 se traduisent évidemment par des variations des vitesses de rotation respectivement du moteur 4 et du moteur 21, et, par conséquent, de la broche 3 et de l'arbre 15. Le variateur de fréquence 27 et l'amplificateur 28 sont, bien sûr, choisis de façon que les vitesses en question puissent être modifiées dans une mesure suffisante pour trouver les vitesses de rotation optimales de la broche 3 et de l'arbre 15 par quelques essais effectués avant de faire démarrer la production en série. La correction décrite à l'aide des boutons 30, 31, est naturellement plus aisée et surtout plus rapide qu'une correction faite à l'aide du clavier 26.

Il va de soi que le dispositif de commande numérique selon l'invention permet de travailler avec tous les jeux de cames que l'utilisateur a en réserve. Pour le prix d'un tour construit spécifiquement en fonction de la commande numérique, il est possible d'acquérir plusieurs dispositifs selon l'invention, d'en équiper plusieurs tours commandés jusqu'alors mécaniquement par cames et, ce faisant, de profiter de la commande numérique tout en conservant les avantages de la commande mécanique pour les grandes séries de pièces à produire.

Bien que le dispositif de commande numérique ait été décrit en rapport avec une décolleteuse, c'est-à-dire avec un tour automatique à poupée mobile, il est clair qu'il peut tout aussi bien être adjoint à un tour à poupée fixe, où il sera même encore plus avantageux, puisque toutes les opérations de tournage dans un tel tour s'effectuent par fonçage de burins de forme et non par une avance de poupée.

**Revendications**

1. Dispositif de commande numérique pour assurer l'entraînement de la broche de la poupée et celui de l'arbre à cames commandant principalement les mouvements de la poupée et des outils associés à la poupée d'un tour automatique monobroche, caractérisé en ce que, pour entraîner l'arbre à cames (15), il comprend un moteur (21) distinct de celui qui entraîne la broche (3) du tour, en ce qu'il comprend, en outre, un encodeur (32) qui est connecté à cet arbre à cames (15) et qui communique continuellement l'angle parcouru par l'arbre à cames à partir du début de chaque cycle à une mémoire (24), en ce que cette mémoire est programmable et est programmée de façon à fournir deux consignes destinées à faire travailler la broche à la vitesse adaptée aux outils engagés ainsi que de faire avancer ou reculer la poupée et/ou les outils engagés également à l'avance la mieux adaptée à l'opération en cours, et en ce qu'à cet effet et au fur et à mesure des informations reçues de l'encodeur (32), ces informations agissent sur la mémoire (24) de façon à lui faire transmettre simultanément la consigne appropriée au moteur (4) entraînant la broche (3) et la consigne appropriée au moteur (21) qui entraîne l'arbre à cames (15).

2. Dispositif de commande selon la revendication 1, caractérisé en ce qu'il comprend un poste de programmation (25) à clavier (26) permettant de conditionner la mémoire (24) en fonction de la nature et de la forme des pièces à produire.

3. Dispositif de commande selon la revendication 1 ou 2, caractérisé en ce que la mémoire (24) transmet ses consignes au moteur (4) entraînant la broche (3) du tour par l'intermédiaire d'un variateur de fréquence (27).

4. Dispositif de commande selon la revendication 1, 2 ou 3, caractérisé en ce que le moteur (21) entraînant l'arbre à cames (15) est à courant continu ou alternatif et en ce que la mémoire (24) lui transmet ses consignes par l'intermédiaire d'un amplificateur (28).

5. Dispositif de commande selon les revendications 3 et 4, caractérisé en ce qu'il comprend deux correcteurs de consigne (29) à bouton de réglage (30, 31), montés à la sortie de la mémoire (24), l'un, au départ de la ligne (36) reliée au variateur de fréquence (27), et l'autre, au départ de la ligne (37) reliée à l'amplificateur (28) et en ce que le poste de programmation (25) permet d'assurer, à volonté, entre n'importe quelle paire d'informations successives de l'encodeur (32), la mise en service desdits correcteurs (29), ces derniers permettant, indépendamment l'un de l'autre, de modifier, dans une proportion réglable manuellement, les consignes de la mémoire destinées respectivement au variateur de fréquence (27) et à l'amplificateur (28).

**Claims**

1. A digital control arrangement in a single spindle automatic lathe for assuring the driving of the headstock spindle and the camshaft which controls mainly the movements of the headstock and the tools associated therewith, characterized in that, it comprises a motor (21) distinct from that which drives the lathe spindle (3) in order to drive the camshaft (15), in that it further comprises an encoder (32) connected to such camshaft (15) and which continuously communicates the angle traversed by the camshaft starting at the beginning of each cycle to a memory (24), in that such memory is programmable and is programmed so as to provide two instructions intended to bring about operation of the spindle at the speed suited to the tools in use as well as likewise to advance or withdraw the headstock and/or the tools in use to the advance best adapted to the operation under way, and in that, to this effect and progressively with reception of information from the encoder (32), such information acts on the memory (24) in a manner to cause it to transmit simultaneously the instruction concerning the motor (4) driving the spindle (3) and the instruction concerning the motor (21) which drives the camshaft.

2. A control arrangement as in claim 1 characterized in that it comprises a programming station (25) having a keyboard (26) enabling processing of the memory (24) as a function of the nature and shape of the parts to be produced.

3. A control arrangement as in claim 1 or 2 characterized in that the memory (24) transmits its instructions to the motor (4) driving the lathe spindle (3) through a frequency varying element (27).

4. A control arrangement as in claim 1, 2 or 3 characterized in that the motor (21) driving the camshaft (15) operates with direct or alternating current and in that the memory (24) transmits its instructions thereto through an amplifier (28).

5. A control arrangement as in claims 3 and 4 characterized in that it comprises two instruction correctors (29) having adjusting knobs (30, 31) mounted at the output of the memory (24), one thereof being at the start of the line (36) coupled to the frequency varying element (27) and the other at the start of the line (37) coupled to the amplifier (28) and in that the programming station (25) permits to assure whenever desired the putting into operation of said correctors between any pair of successive information items from the encoder (32), such correctors enabling the modification of the instructions from the memory directed respectively to the frequency varying element (27) and the amplifier (28) independently from one another and in a manually adjustable proportion.

**Patentansprüche**

1. Numerische Steuervorrichtung zum Sicherstellen des Antriebs der Spindel des Spindelstocks und der Nockenwelle, die prinzipiell die Bewegungen des Spindelstocks und der dem Spindelstock einer automatischen Einspindeldrehmaschine zugeordneten Werkzeuge steuert, dadurch gekennzeichnet, daß sie für den Antrieb der Nockenwelle (15) einen Motor (21) gesondert von dem die Spindel (3) der Drehmaschine antreibenden aufweist, daß sie ferner einen mit der Nockenwelle (15) verbundenen Geber (32) umfaßt, der kontinuierlich den von der Nockenwelle vom Beginn jedes Zyklus an durchlaufenen Drehwinkel einem Speicher (24) übermittelt, daß der Speicher programmierbar und programmiert ist zum Liefern von zwei Führungsgrößen, bestimmt zum Laufenlassen der Spindel mit einer an die im Eingriff befindlichen Werkzeuge angepaßten Drehzahl und zum Vor- und Rücklaufenlassen des Spindelstocks und/oder der im Eingriff befindlichen Werkzeuge mit einer am besten an den jeweiligen Arbeitsgang angepaßten Geschwindigkeit, und daß zu diesem Zweck je nach den vom Geber (32) empfangenen Informationen diese Informationen auf den Speicher (24) derart einwirken, daß dieser gleichzeitig die richtige Führungsgröße zu dem die Spindel (3) antreibenden Motor (4) und die richtige Führungsgröße zu dem die Nockenwelle (15) antreibenden Motor (21) überträgt.

2. Steuervorrichtung nach Anspruch 1, dadurch gekennzeichnet, daß sie eine Programmierstation (25) mit Tastenfeld (26) umfaßt, die es ermöglicht, den Speicher (24) in Abhängigkeit von der Art und Form der zu erzeugenden Werkstücke zu konditionieren.

3. Steuervorrichtung nach Anspruch 1 oder 2, dadurch gekennzeichnet, daß der Speicher (24) seine Führungsgrößen zu dem Antriebsmotor (4) der Spindel (3) der Drehmaschine über einen Frequenzwandler (27) überträgt.

4. Steuervorrichtung nach Anspruch 1, 2 oder 3, dadurch gekennzeichnet, daß der die Nockenwelle (15) antreibende Motor (21) ein Gleich- oder Wechselstrommotor ist und daß der Speicher ihm seine Führungsgrößen über einen Verstärker (28) zuführt.

5. Steuervorrichtung nach Ansprüchen 3 und 4, dadurch gekenzeichnet, daß sie zwei Führungsgrößen-Korrigieranordnungen (29) mit Einstellknöpfen (30, 31) am Ausgang des Speichers (24) angeordnet umfaßt, die eine am Beginn der mit dem Frequenzwandler (27) verbundenen Leitung (36) und die andere am Beginn der mit dem Verstärker (28) verbundenen Leitung (37), und daß die Programmierstation (25) es ermöglicht, wahlweise zwischen irgendwelchen aufeinanderfolgenden Informationspaaren des Gebers (32) die Inbetriebnahme der Korrigieranordnungen (29) sicherzustellen, welche letzteren es ermöglichen, unabhängig voneinander in manuell einstellbarer Proportion die Führungsgrößen des Speichers für den Frequenzwandler (27) bzw. für den Verstärker (28) zu modifizieren.